# EUROPEAN PATENT SPECIFICATION

(11) **EP 3 537 524 B1**
(45) Date of publication and mention of the grant of the patent: **19.01.2022**
(21) Application number: 17867177.2
(22) Date of filing: 06.11.2017
(51) Int. Cl.: H01M 4/86, H01M 4/88, H01M 8/12, H01M 4/90, C04B 35/636, C04B 35/622, C04B 35/01

(54) **COMPOSITE PARTICLE POWDER, ELECTRODE MATERIAL FOR SOLID OXIDE CELL, AND ELECTRODE FOR SOLID OXIDE CELL MADE THEREOF**
VERBUNDPARTIKELPULVER, ELEKTRODENMATERIAL FÜR FESTOXIDZELLE UND DARAUS HERGESTELLTE ELEKTRODE FÜR FESTOXIDZELLE
POUDRE DE PARTICULES COMPOSITES, MATÉRIAU D'ÉLECTRODE POUR CELLULE À OXYDE SOLIDE, ET ÉLECTRODE POUR CELLULE À OXYDE SOLIDE FABRIQUEE A PARTIR DE CE MATERIAU

(30) Priority: 07.11.2016 JP 2016217196
(43) Date of publication of application: 11.09.2019
(73) Proprietor: National Institute of Advanced Industrial Science and Technology, Tokyo 100-8921 (JP)
(72) Inventor: SHIMADA Hiroyuki, Nagoya-shi Aichi 463-8560 (JP); YAMAGUCHI Toshiaki, Nagoya-shi Aichi 463-8560 (JP); YAMAGUCHI Yuki, Nagoya-shi Aichi 463-8560 (JP)
(74) Representative: Müller-Boré & Partner Patentanwälte PartG mbB
(86) International application number: PCT/JP2017/039924
(87) International publication number: WO 2018/084279

(56) References cited:
- CN-A- 101 662 033
- JP-A- 2008 226 531
- JP-A- 2010 282 772
- JP-A- 2010 282 932
- JP-A- 2010 282 933

## Description

The present invention relates to a composite particle powder as a raw material of an electrode material for a solid oxide cell, an electrode material for a solid oxide cell made thereof, an electrode for a solid oxide cell made thereof, and a method for manufacturing the same.

Research and development have been conducted for the implementation of solid oxide cells as a device enabling high-efficiency energy conversion. Typical examples include solid oxide fuel cells and solid oxide electrolytic cells.

A solid oxide cell is mainly composed of oxides, basically comprising a dense electrolyte sandwiched between electrodes (air electrode and fuel electrode). A wide working temperature region can be selected for use at 400 to 1000°C depending on constituent materials

As electrolyte materials, ion-conducting materials are used. Examples thereof include oxides having oxide ion-conductivity such as zirconia and ceria, or oxides having proton-conductivity such as perovskite materials.

As electrode materials, electron-conducting oxides or metals having catalytic activity are used (hereinafter, referred to as "electron-conducting materials"). Electron-conducting materials may be used alone, or the same material as the electrolyte or an ion-conducting material conducting the same ions as the electrolyte (all of the ions to make conduction carriers including oxide ions and protons are collectively called as "ions") may be mixed with the electron-conducting material for use. In general, compounding of an electron-conducting material and an ion-conducting material reduces the reaction resistance of an electrode.

Examples of the electron-conducting material for the air electrode of solid oxide cells include a perovskite oxide material such as (LaSr)MnO₃, (LaSr)FeO₃, (LaSr)CoO₃, and (LaSr) (CoFe)O₃. La in the electron-conducting material may be substituted or partially substituted with other lanthanoids (Pr, Sm and Gd), and Sr may be substituted or partially substituted with other alkali earth metals (Ca and Ba).

Examples of the electron-conducting material for the fuel electrode of solid oxide cells include metal materials such as Ni, Cu and Fe. The metal materials include ones reduced by a gas such as hydrogen, carbon monoxide, a hydrocarbon and a biomass fuel. For example, when NiO (oxide) is used as a raw material for production to make a solid oxide cell, the NiO is reduced to Ni (metal) by the gas during operation.

An important problem to be solved for the spread of solid oxide cells is improvement in the output performance per unit volume directly linked to cost reduction. The important factor of the output performance per unit volume of a solid oxide cell is the current per unit area of an electrode (herein after referred to as "current density"). Various research and development activities are currently underway to improve the current density.

A dominant factor for determining the current density of a solid oxide cell is the electrode resistance. The electrochemical reaction occurring at an electrode involves generation of an overvoltage (voltage difference between equilibrium state and operating state). From the perspective of high-efficiency operation, an electrode having low electrode resistance, capable of achieving high current density at a low overvoltage, is required.

As a result of the research and development so far, for example, an electrode capable of achieving high current density by compounding an electron-conducting material and an ion-conducting material to reduce electrode resistance is disclosed (Patent Literature 1). Also, nanosizing of an electrode structure and electrode material to achieve a further higher current density is disclosed (Patent Literature 2). Patent Literature 3 describes an air electrode for solid oxide fuel cell, and cell of solid oxide fuel cell.

[Patent Literature 1] Japanese Patent Laid-Open No. 2005-139024
[Patent Literature 2] Japanese Patent Laid-Open No. 2010-282932
[Patent Literature 3] Japanese Patent Laid-Open No. 2010-282933

As described above, in order to reduce the cost of a solid oxide cell, the electrode resistance needs to be drastically reduced from those of the conventional art. Although the conventional arts described above successfully reduce the electrode resistance, a further higher current density is required for the early spread and commercialization of solid oxide cells.

An object of the present invention is therefore to provide an electrode having low electrode resistance using an oxide or a metal as a raw material.

Through extensive research to solve the problem in the conventional arts, the present inventors have found that use of an electrode material made of composite particle powder comprising a plurality of oxides having different crystal structures or metal materials compounded at specified content ratios, the composite particle powder having an average particle diameter and particle size distribution in specific ranges can drastically reduce the electrode resistance, so that the present invention has been accomplished.

In order to solve the problem, the present invention is characterized by the following.

(1) A composite particle powder comprising an electron-conducting material and an ion-conducting material that are agglomerated together, the electron-conducting material being an electron-conducting oxide or a metal having catalytic activity and the ion-conducting material being an oxide having oxide ion-conductivity or an oxide having proton-conductivity;
   the composite particle powder having a volume-based 50% particle diameter (D50) of larger than 0.1 *µ*m and 2.0 µm or less in particle size distribution measurement;
   the composite particle powder having a ratio of volume-based 75% particle diameter (D75) to 25% particle diameter (D25), (D75/D25), of 1.1 to 2.2 in particle size distribution measurement;
   the composite particle powder having D50 and a BET specific surface area that satisfy the following:
      (I) in the case of 0.1 µm < D50 of the composite particle powder ≤ 0.5 µm, the BET specific surface area of the composite particle powder is larger than 25 m²/g and 200 m²/g or less;
      (II) in the case of 0.5 µm < D50 of the composite particle powder ≤ 0.9 µm, the BET specific surface area of the composite particle powder is larger than 5 m²/g and 50 m²/g or less;
      (III) in the case of 0.9 µm < D50 of the composite particle powder ≤ 1.3 µm, the BET specific surface area of the composite particle powder is larger than 4 m²/g and 30 m²/g or less; and
      (IV) in the case of 1.3 µm < D50 of the composite particle powder ≤ 2.0 µm, the BET specific surface area of the composite particle powder is larger than 2 m²/g and 20 m²/g or less; and
   the composite particle powder having an ion-conducting material content of 35 to 75 mass%.
(2) An electrode for a solid oxide cell obtained by forming and firing the composite particle powder according to item (1).
(3) The electrode for a solid oxide cell according to item (2), wherein the composite particle powder is a composite particle powder for an air electrode.
(4) The electrode for a solid oxide cell according to item (2), wherein the composite particle powder is a composite particle powder for a fuel electrode.
(5) A solid oxide cell comprising an electrolyte, and an air electrode and a fuel electrode sandwiching the electrolyte, wherein the air electrode is the electrode for a solid oxide cell according to item (3).
(6) A solid oxide cell comprising an electrolyte, and an air electrode and a fuel electrode sandwiching the electrolyte, wherein the fuel electrode is the electrode for a solid oxide cell according to item (4).

According to the present invention, an electrode having a low electrode resistance can be provided. Also, according to the present invention, a solid oxide cell capable of achieving a high current density can be provided.

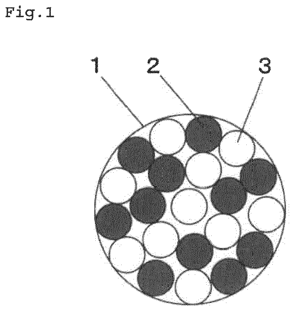

[Figure 1] Figure 1 is a schematic cross-sectional view illustrating a composite particle powder of the present invention.

A composite particle powder of the present invention comprises an electron-conducting material and an ion-conducting material that are agglomerated together;
the composite particle powder having a volume-based 50% particle diameter (D50) of larger than 0.1 *µ*m and 2.0 µm or less in particle size distribution measurement;
the composite particle powder having a ration of volume-based 75% particle diameter (D75) to 25% particle diameter (D25), (D75/D25), of 1.1 to 2.2 in particle size distribution measurement;
the composite particle powder having D50 and a BET specific surface area that satisfy the following:

(I) in the case of 0.1 µm < D50 of the composite particle powder ≤ 0.5 µm, the BET specific surface area of the composite particle powder is larger than 25 m²/g and 200 m²/g or less;
(II) in the case of 0.5 µm < D50 of the composite particle powder ≤ 0.9 µm, the BET specific surface area of the composite particle powder is larger than 5 m²/g and 50 m²/g or less;
(III) in the case of 0.9 µm < D50 of the composite particle powder ≤ 1.3 µm, the BET specific surface area of the composite particle powder is larger than 4 m²/g and 30 m²/g or less; and
(IV) in the case of 1.3 µm < D50 of the composite particle powder < 2.0 µm, the BET specific surface area of the composite particle powder is larger than 2 m²/g and 20 m²/g or less; and
   the composite particle powder having an ion-conducting material content of 35 to 75 mass%.

In the present specification, when a numerical range is represented by using "to", the numerical values at both ends are included.

With reference to Figure 1, the composite particle powder of the present invention is described. Figure 1 is a schematic cross-sectional view of the composite particle powder. As illustrated in Figure 1, a composite particle 1 is an agglomerate (secondary particle) including many particles of electron-conducting material 2 and particles of ion-conducting material 3 as primary particles that are agglomerated together. The composite particles 1 in a powder form are formed and fired by a known method to produce an electrode for a solid oxide cell. Note that the composite particle 1 illustrated in Figure 1 represents one particle in the composite particle powder. In other words, the composite particle powder is a mass of the composite particles 1.

The electrode for a solid oxide cell according to the present invention is an electrode obtained by forming and firing the composite particle powder of the present invention.

In Figure 1, when an air electrode is produced from a composite particle powder, the electron-conducting material particle 2 is an electron-conducting material for an air electrode, while when a fuel electrode is produced, the electron-conducting material particle 2 is an electron-conducting material for the fuel electrode.

The composite particle powder of the present invention for use in production of the electrode for a solid oxide cell according to the present invention is classified into two types: a composite particle powder for an air electrode, as a raw material for producing an air electrode, and a composite particle powder for a fuel electrode, as a raw material for producing a fuel electrode. When the composite particle powder of the present invention is a composite particle powder for an air electrode, the electrode for a solid oxide cell according to the present invention is an air electrode. When the composite particle powder of the present invention is a composite particle powder for a fuel electrode, the electrode for a solid oxide cell according to the present invention is a fuel electrode.

Of the composite particle powder of the present invention, the composite particle powder for an air electrode is a composite particle powder comprising an electron-conducting material for an air electrode and an ion-conducting material that are agglomerated together. Also, of the composite particle powder of the present invention, the composite particle powder for a fuel electrode is a composite particle powder comprising an electron-conducting material for a fuel electrode and an ion-conducting material that are agglomerated together. In Figure 1, when the electron-conducting material particle 2 is made of electron-conducting material for an air electrode, a composite particle powder for an air electrode is illustrated, while when the electron-conducting material particle 2 is made of electron-conducting material for a fuel electrode, a composite particle powder for a fuel electrode is illustrated.

An electron-conducting material for an air electrode refers to a material usable in a high-temperature oxidizing atmosphere, having a catalytic activity for oxidation or reduction reaction on the air electrode-side, and properties for conducting electrons. The electron-conducting material for an air electrode is not particularly limited as long as it is an electron-conducting oxide or a metal having catalytic activity, and examples thereof include metal oxides such as (LaSr)MnO₃, (LaSr)FeO₃, (LaSr)CoO₃ and (LaSr) (CoFe)O₃. One type or a combination of two or more types of electron-conducting materials for an air electrode may be used.

As the electron-conducting material for an air electrode, a perovskite oxide material represented by the following general formula (1) is preferred:

A₍₁₋ₓ₎B₍ₓ₎C_{(y)}O₃ (1)

In the general formula (1), A is at least one or more of Y, La, Ce, Pr, Sm and Gd, and preferably one or more of La and Sm. Also, B is at least one or more of Sr, Ca and Ba, and preferably Sr. C is at least one of Cr, Mn, Fe, Co, Ni and Cu, and preferably at least one or more of Mn, Fe and Co. Also, x is 0.2 to 0.5, preferably 0.25 to 0.5, and particularly preferably 0.3 to 0.5. Also, y is 1.0 to 1.15, preferably 1.0 to 1.1, and particularly preferably 1.0 to 1.05.

The perovskite oxide materials represented by the general formula (1) may be of one type alone or in combinations of two or more.

The ion-conducting material refers to a material having properties for conducting ions to be oxidized or reduced at an air electrode. The ion-conducting material is not particularly limited as long as it is an oxide having oxide ion-conductivity or an oxide having proton-conductivity and examples thereof include metal oxides such as stabilized zirconia doped with a metal element such as Al, Ca, Sc, Y and Ce; ceria doped with a metal element such as Sc, Y, La, Sm, Gd and Yb; lanthanum gallate doped with a metal element such as Mg, Al, Ca, Sr, Cr, Mn, Fe, Co and Ni; lanthanum aluminate doped with a metal element such as Mg, Al, Ca, Sr, Cr, Mn, Fe, Co and Ni; lanthanum scandinate doped with a metal element such as Mg, Al, Ca, Sr, Cr, Mn, Fe, Co and Ni; bismuth oxide doped with a metal element such as Y, Nb, Gd and W; a pyrochlore oxide such as lanthanum zirconate, samarium zirconate, and gadolinium zirconate; and a perovskite oxide such as strontium zirconate, strontium cerate, strontium zirconate cerate, barium zirconate, barium cerate and barium zirconium cerate doped with a metal element such as Sc, Cr, Mn, Fe, Co, Ni, Y, In, La, Pr, Nd, Sm, Gd and Yb. The ion-conducting materials may be singly or in combinations of two or more.

As the ion-conducting material, stabilized zirconia, doped ceria, doped barium zirconate, and doped barium zirconate cerate are preferred.

The electron-conducting material for a fuel electrode refers to a material usable in a high-temperature reducing atmosphere, having a catalytic activity for oxidation or reduction reaction of a gas on the fuel electrode-side and properties for conducting electrons, the material including a metal oxide that is reduced to a metal during operation. The electron-conducting material for a fuel electrode is not particularly limited as long as it is an electron-conducting oxide or a metal having catalytic activity, and examples thereof include metal oxides such as iron oxide, nickel oxide and copper oxide. The electron-conducting materials for a fuel electrode may be of one type alone or in combinations of two or more.

As the electron-conducting material for a fuel electrode, nickel oxide is preferred.

The content of the ion-conducting material in the composite particle powder of the present invention, i.e., ({mass of ion-conducting material/(mass of electron-conducting material + mass of ion-conducting material)} × 100), is preferably 35 to 75 mass%, particularly preferably 40 to 65 mass%, and more preferably 45 to 60 mass%. With a content of the ion-conducting material in the composite particle powder in the range, the electrode resistance is reduced.

In particle size distribution measurement of the composite particle powder of the present invention, the volume-based 50% particle diameter (D50) is larger than 0.1 *µ*m and 2.0 µm or less, preferably 0.3 to 1.5 µm, and particularly preferably 0.5 to 1.3 µm. With a volume-based 50% particle diameter (D50) in the range in particle size distribution measurement of the composite particle powder, the electrode resistance is reduced.

In particle size distribution measurement of the composite particle powder of the present invention, the ratio of volume-based 75% particle diameter (D75) to 25% particle diameter (D25), (D75/D25), is 1.1 to 2.2, preferably 1.1 to 1.9, and particularly preferably 1.1 to 1.6. With a ratio of volume-based 75% particle diameter (D75) to 25% particle diameter (D25), (D75/D25), in the range, the electrode resistance is reduced.

In the present invention, the particle size distribution of the composite particle powder is measured by laser diffraction particle size analysis (e.g., Microtrack Series, manufactured by Nikkiso Co., Ltd.). The volume-based D25, D50 and D75 in particle size distribution measurement are diameters of particles corresponding to the cumulative volumes at 25%, 50% and 75% from the lower end relative to the total volume, respectively. Also, the particle diameter measured in particle size distribution measurement of the composite particle powder is the diameter of an agglomerate (secondary particle) composed of electron-conducting material particles or ion-conducting material particles as primary particles that are agglomerated together.

The composite particle powder of the present invention has a BET specific surface area in the following range to reduce the electrode resistance:
(I) in the case of 0.1 µm < D50 of composite particle powder ≤ 0.5 µm, the BET specific surface area of the composite particle powder is larger than 25 m²/g and 200 m²/g or less, preferably 25 to 150 m²/g, and particularly preferably 30 to 120 m²/g;
(II) in the case of 0.5 µm < D50 of composite particle powder ≤ 0.9 µm, the BET specific surface area of the composite particle powder is larger than 5 m²/g and 50 m²/g or less, preferably 5 to 40 m²/g, and particularly preferably 6 to 30 m²/g;
(III) in the case of 0.9 µm < D50 of composite particle powder ≤ 1.3 µm, the BET specific surface area of the composite particle powder is larger than 4 m²/g and 30 m²/g or less, preferably 4 to 25 m²/g, and particularly preferably 4 to 20 m²/g; and
(IV) in the case of 1.3 µm < D50 of the composite particle powder ≤ 2.0 µm, the BET specific surface area of the composite particle powder is larger than 2 m²/g and 20 m²/g or less, preferably 2.5 to 18 m²/g, and particularly preferably 3 to 15 m²/g.

The composite particle powder of the present invention is suitably produced by the method for producing composite particle powder as described below.

A method for producing composite particle powder in a first embodiment comprises an aqueous atomization solution preparation step for preparing an aqueous atomization solution containing a metal salt as an electron-conducting material source for an air electrode or a fuel electrode and a metal salt as an ion-conducting material source, and an atomization and thermal decomposition step for atomizing the aqueous atomization solution by ultrasonic vibration and then introducing the atomized aqueous solution into a heating furnace so as to obtain a composite particle powder comprising electron-conducting material particles for an air electrode or a fuel electrode and ion-conducting material particles that are agglomerated together.

The metal salt as the electron-conducting material source for an air electrode in the aqueous atomization solution preparation step is a material that is thermally decomposed and oxidized in the atomization and thermal decomposition step to be transformed into an electron-conducting material for an air electrode, being a salt of metal element constituting the electron-conducting material for an air electrode. The metal species of the metal salt is appropriately selected depending on the selection of types of oxides for the electron-conducting material for an air electrode. Examples of the metal salt as the perovskite oxide material source represented by the general formula (1) include salts of metal elements such as Y, La, Ce, Pr, Sm, Gd, Sr, Ca, Ba, Cr, Mn, Fe, Co, Ni and Cu. More specifically, for example, in the case of the perovskite oxide material represented by the general formula (1) of (LaSr) (CoFe)O₃, the combination of metal salts as the perovskite oxide material source represented by the general formula (1) includes lanthanum nitrate, strontium nitrate, cobalt nitrate and iron nitrate.

The metal salt as the ion-conducting material source for an air electrode in the aqueous atomization solution preparation step is a material that is thermally decomposed and oxidized in the atomization and thermal decomposition step to be transformed into the ion-conducting material, being a salt of metal element constituting the ion-conducting material. The metal species of the metal salt is appropriately selected depending on the selection of types of oxides for the ion-conducting material. Examples of the metal salt as a stabilized zirconia source include salts of metal elements such as Al, Ca, Sc, Y, Zr, and Ce. More specifically, for example, in the case of the stabilized zirconia of yttria-stabilized zirconia, the combination of metal salts as the stabilized zirconia source includes yttrium nitrate and zirconium nitrate.

The metal salt as the electron-conducting material source for a fuel electrode in the aqueous atomization solution preparation step is a material that is thermally decomposed and oxidized in the atomization and thermal decomposition step to be transformed into the electron-conducting material for a fuel electrode, being a salt of metal element constituting the electron-conducting material for a fuel electrode. The metal species of the metal salt is appropriately selected depending on the selection of types of oxides for the electron-conducting material for a fuel electrode. Examples of the metal salt as the electron-conducting material source include salts of metal elements such as Fe, Ni and Cu. More specifically, for example, in the case of the electron-conducting material for a fuel electrode of nickel oxide, the metal salt is nickel nitrate.

The total molar concentration in terms of the electron-conducting material and ion-conducting material in the aqueous atomization solution is 0.01 to 1 mol/L, preferably 0.02 to 0.7 mol/L, and particularly preferably 0.05 to 0.5 mol/L. With a total molar concentration in terms of the electron-conducting material and ion-conducting material in the aqueous atomization solution in the range described above, D50 and D75/D25 of the composite particle powder can be in the ranges described above, so that the electrode resistance is reduced. The total molar concentration in terms of the electron-conducting material and ion-conducting material in the aqueous atomization solution is a value obtained by dividing the total number of moles in terms of electron-conducting material and ion-conducting material by the volume of the aqueous atomization solution, when the metal elements in the aqueous atomization solution are converted into the electron-conducting material and the ion-conducting material by thermal decomposition and oxidation.

The types of the metal salt are not particularly limited, and examples thereof include a nitrate, a chloride salt, a sulfate, a carbonate and an acetate.

The aqueous atomization solution is a solution in which a metal salt as an electron-conducting material source for an air electrode and a metal salt as an ion-conducting material source, or a metal salt as an electron-conducting material source for a fuel electrode and a metal salt as the ion-conducting material source are dissolved in a solvent. Examples of the solvent for the aqueous atomization solution include water and alcohol.

In the method for producing a composite particle powder in the first embodiment, an appropriate selection of the concentration ratio of each metal element contained in the aqueous atomization solution enables adjustment of the composition ratios between various metal elements that constitute a primary particle of an electron-conducting material for an air electrode, a primary particle of an electron-conducting material for a fuel electrode, and a primary particle of an ion-conducting material in the composite particle.

The atomization and thermal decomposition step is a step of atomizing the aqueous atomization solution in an atomization device by ultrasonic vibration and then introducing the atomized aqueous solution into a heating furnace through a pipe connected to the atomization device with air or nitrogen flow, and thermally decomposing and oxidizing the metal salt as an electron-conducting material source for an air electrode or the metal salt as an electron-conducting material source for a fuel electrode, and the metal salt as an ion-conducting material source in the aqueous atomization solution, so as to obtain a composite particle powder of an electron-conducting material for an air electrode or an electron-conducting material for a fuel electrode and an ion-conducting material that are agglomerated together.

In the atomization and thermal decomposition step of the method for producing a composite particle powder in the first embodiment, the atomization and thermal decomposition method is a method using ultrasonic vibration.

The heating furnace may be a one-stage heating furnace, or a multi-stage heating furnace composed of a plurality of connected heating furnaces having different set temperatures, respectively.

In the case of using a one-stage heating furnace, the heating furnace is at a temperature of 500 to 1200°C for a heating time of 1 to 120 seconds, preferably at 800 to 1200°C for a heating time of 3 to 60 seconds.

In the case of using a two-stage heating furnace, the front stage is at a temperature of 100 to 600°C for a heating time of 1 to 60 seconds, preferably at 200 to 500°C for a heating time of 2 to 40 seconds, and the rear stage is at a temperature of 500 to 1200°C for a heating time of 1 to 60 seconds, preferably at 800 to 1200°C for a heating time of 2 to 40 seconds.

In the case of using a three-stage heating furnace, the front stage is at a temperature of 100 to 600°C for a heating time of 1 to 50 seconds, preferably at 200 to 500°C for a heating time of 2 to 35 seconds, the middle stage is at a temperature of 400 to 800°C for a heating time of 1 to 50 seconds, preferably at 500 to 800°C for a heating time of 2 to 35 seconds, and the rear stage is at a temperature of 600 to 1200°C for a heating time of 1 to 50 seconds, preferably at 800 to 1200°C for a heating time of 2 to 35 seconds.

Also, the heating furnace for use may be a four-stage heating furnace. In this case, the first stage is at a temperature of 100 to 400°C for a heating time of 1 to 40 seconds, preferably at 200 to 300°C for a heating time of 2 to 30 seconds, the second stage is at a temperature of 300 to 700°C for a heating time of 1 to 40 seconds, preferably at 300 to 600°C for a heating time of 2 to 30 seconds, the third stage is at a temperature of 500 to 900°C for a heating time of 1 to 40 seconds, preferably at 600 to 800°C for a heating time of 2 to 30 seconds, and the fourth stage is at a temperature of 700 to 1200°C for a heating time of 1 to 40 seconds, preferably at 800 to 1200°C for a heating time of 2 to 30 seconds.

Also, a five or more-stage furnace may be used with the set temperature being further segmented.

Through the atomization and thermal composition step, the composite particle powder is obtained.

In the method for producing a composite particle powder in the first embodiment, an aqueous atomization solution is thermally decomposed and oxidized by an atomization and thermal decomposition method using ultrasonic vibration so as to produce the composite particle powder. The composite particle powder of the present invention, however, may be obtained through thermal decomposition and oxidation of the aqueous atomization solution in the method for producing a composite particle powder in the first embodiment, by an atomization and thermal decomposition method using a spray nozzle.

In the atomization and thermal decomposition method using a spray nozzle, the particles produced tend to have a large value of D75/D25. The conditions of the atomization and thermal decomposition method using a spray nozzle, such as nozzle shape, liquid feed rate, injection pressure and injection air volume, are therefore appropriately selected, such that the particles produced have D50, D75/D25 and a BET specific surface area within the ranges of D50, D75/D25 and the BET specific surface area of the composite particle powder described above.

The electrode for a solid oxide cell according to the present invention is an electrode for a solid oxide cell, obtained by forming and firing the composite particle powder of the present invention. Of the electrodes for a solid oxide cell according to the present invention, the air electrode is an electrode for a solid oxide cell, obtained by forming and firing the composite particle powder for an air electrode, of the composite particle powder of the present invention. Of the electrodes for a solid oxide cell according to the present invention, the fuel electrode is an electrode for a solid oxide cell, obtained by forming and firing the composite particle powder for a fuel electrode, of the composite particle powder of the present invention.

For the electrode for a solid oxide cell, the method for forming and firing the composite particle powder of the present invention is not particularly limited. Examples of the method include the steps of: forming the composite particle powder of the present invention by pressing, or slurrying the composite particle powder of the present invention and then forming the slurry by screen printing, doctor blading, or spin coating; and subsequently firing the formed product of the composite particle powder at 800 to 1300°C, preferably 900 to 1200°C. As a result, an electrode for a solid oxide cell is obtained from the composite particle powder of the present invention.

Since the electrode for a solid oxide cell according to the present invention is an electrode comprising the composite particle powder having D50 and D75/D25 in the specific ranges described above, the electrode resistance is small.

The solid oxide cell in a first embodiment of the present invention comprises an electrolyte, and an air electrode and a fuel electrode sandwiching the electrolyte, wherein the air electrode is an electrode for a solid oxide cell, obtained by forming and firing the composite particle powder for an air electrode, of the composite particle powder of the present invention. In other words, the solid oxide cell in the first embodiment of the present invention comprises an electrolyte, and an air electrode and a fuel electrode sandwiching the electrolyte, wherein the air electrode is an electrode for a solid oxide cell for an air electrode, of the electrodes for a solid oxide cell according to the present invention.

The solid oxide cell in a second embodiment of the present invention comprises an electrolyte, and an air electrode and a fuel electrode sandwiching the electrolyte, wherein the fuel electrode is an electrode for a solid oxide cell, obtained by forming and firing the composite particle powder for a fuel electrode, of the composite particle powder of the present invention. In other words, the solid oxide cell in the second embodiment of the present invention is a solid oxide cell comprising an electrolyte, and an air electrode and a fuel electrode sandwiching the electrolyte, wherein the fuel electrode is an electrode for a solid oxide cell for a fuel electrode, of the electrodes for a solid oxide cell according to the present invention.

The electrolyte of the solid oxide cell of the present invention is not particularly limited, so long as the electrolyte is for use in solid oxide cells.

### Examples

The present invention is described in further detail with reference to Examples as follows. The description, however, is for illustrative purposes only, and the invention is not limited thereto.

### <Preparation of aqueous atomization solution>

### (1) Aqueous atomization solution s1

First, 16.07 g of samarium nitrate hexahydrate, 5.70 g of strontium nitrate, 15.67 g of cobalt nitrate hexahydrate, and 16.04 g of cerium nitrate hexahydrate were weighed and dissolved in pure water. Subsequently, pure water was further added thereto, such that the amount of the aqueous solution reached 1000 ml, so that an aqueous atomization solution s1 was prepared. Through atomization and thermal decomposition of the aqueous atomization solution s1, 0.1 mol per L of 60 mass% Sm_{0.5}Sr_{0.5}Co₃ (hereinafter, referred to as SSC) -40 mass% Ce_{0.8}Sm_{0.2}O_{1.9} (hereinafter, referred to as SDC) can be synthesized.

### (2) Aqueous atomization solution s2

First, 14.72 g of samarium nitrate hexahydrate, 4.63 g of strontium nitrate, 12.73 g of cobalt nitrate hexahydrate, and 19.54 g of cerium nitrate hexahydrate were weighed and dissolved in pure water. Subsequently, pure water was further added thereto, such that the amount of the aqueous solution reached 1000 ml, so that an aqueous atomization solution s2 was prepared. Through atomization and thermal decomposition of the aqueous atomization solution s2, 0.1 mol per L of 50 mass% SSC-50 mass% SDC can be synthesized.

### (3) Aqueous atomization solution s3

First, 13.44 g of samarium nitrate hexahydrate, 3.61 g of strontium nitrate, 9.94 g of cobalt nitrate hexahydrate, and 22.88 g of cerium nitrate hexahydrate were weighed and dissolved in pure water. Subsequently, pure water was further added thereto, such that the amount of the aqueous solution reached 1000 ml, so that an aqueous atomization solution s3 was prepared. Through atomization and thermal decomposition of the aqueous atomization solution s3, 0.1 mol per L of 40 mass% SSC-60 mass% SDC can be synthesized.

### (4) Aqueous atomization solution s4

First, 12.22 g of samarium nitrate hexahydrate, 2.64 g of strontium nitrate, 7.27 g of cobalt nitrate hexahydrate, and 26.06 g of cerium nitrate hexahydrate were weighed and dissolved in pure water. Subsequently, pure water was further added thereto, such that the amount of the aqueous solution reached 1000 ml, so that an aqueous atomization solution s4 was prepared. Through atomization and thermal decomposition of the aqueous atomization solution s4, 0.1 mol per L of 30 mass% SSC-70 mass% SDC can be synthesized.

### (5) Aqueous atomization solution s5

First, 11.63 g of samarium nitrate hexahydrate, 2.18 g of strontium nitrate, 5.99 g of cobalt nitrate hexahydrate, and 27.59 g of cerium nitrate hexahydrate were weighed and dissolved in pure water. Subsequently, pure water was further added thereto, such that the amount of the aqueous solution reached 1000 ml, so that an aqueous atomization solution s5 was prepared. Through atomization and thermal decomposition of the aqueous atomization solution s5, 0.1 mol per L of 25 mass% SSC-75 mass% SDC can be synthesized.

### (6) Aqueous atomization solution s6

First, 8.50 g of lanthanum nitrate hexahydrate, 2.77 g of strontium nitrate, 9.39 g of manganese nitrate hexahydrate, 16.55 g of zirconyl nitrate dihydrate, and 4.12 g of yttrium nitrate hexahydrate were weighed and dissolved in pure water. Subsequently, pure water was further added thereto, such that the amount of the aqueous solution reached 1000 ml, so that an aqueous atomization solution s6 was prepared. Through atomization and thermal decomposition of the aqueous atomization solution s6, 0.1 mol per L of 45 mass% La_{0.6}Sr_{0.4}MnO₃ (hereinafter, referred to as LSM) -55 mass% (ZrO₂)_{0.92}(Y₂O₃)_{0.08} (hereinafter, referred to as 8YSZ) can be synthesized.

### <Preparation of aqueous atomization solution as Comparative Example>

### (1) Aqueous atomization solution s7

First, 18.98 g of samarium nitrate hexahydrate, 8.01 g of strontium nitrate, 22.02 g of cobalt nitrate hexahydrate, and 8.45 g of cerium nitrate hexahydrate were weighed and dissolved in pure water. Subsequently, pure water was further added thereto, such that the amount of the aqueous solution reached 1000 ml, so that an aqueous atomization solution s7 was prepared. Through atomization and thermal decomposition of the aqueous atomization solution s7, 0.1 mol per L of 80 mass% SSC-20 mass% SDC can be synthesized.

### (2) Aqueous atomization solution s8

First, 3.50 g of samarium nitrate hexahydrate, 1.36 g of strontium nitrate, 3.75 g of cobalt nitrate hexahydrate, and 2.47 g of cerium nitrate hexahydrate were weighed and dissolved in pure water. Subsequently, pure water was further added thereto, such that the amount of the aqueous solution reached 1000 ml, so that an aqueous atomization solution s8 was prepared. Through atomization and thermal decomposition of the aqueous atomization solution s8, 0.02 mol per L of 70 mass% SSC-30 mass% SDC can be synthesized.

### (3) Aqueous atomization solution s9

First, 17.49 g of samarium nitrate hexahydrate, 6.82 g of strontium nitrate, 18.76 g of cobalt nitrate hexahydrate, and 12.34 g of cerium nitrate hexahydrate were weighed and dissolved in pure water. Subsequently, pure water was further added thereto, such that the amount of the aqueous solution reached 1000 ml, so that an aqueous atomization solution s9 was prepared. Through atomization and thermal decomposition of the aqueous atomization solution s9, 0.1 mol per L of 70 mass% SSC-30 mass% SDC can be synthesized.

### (4) Aqueous atomization solution s10

First, 87.43 g of samarium nitrate hexahydrate, 34.11 g of strontium nitrate, 93.81 g of cobalt nitrate hexahydrate, and 61.72 g of cerium nitrate hexahydrate were weighed and dissolved in pure water. Subsequently, pure water was further added thereto, such that the amount of the aqueous solution reached 1000 ml, so that an aqueous atomization solution s10 was prepared. Through atomization and thermal decomposition of the aqueous atomization solution s10, 0.5 mol per L of 70 mass% SSC-30 mass% SDC can be synthesized.

### (5) Aqueous atomization solution s11

First, 11.06 g of samarium nitrate hexahydrate, 1.72 g of strontium nitrate, 4.74 g of cobalt nitrate hexahydrate, and 29.08 g of cerium nitrate hexahydrate were weighed and dissolved in pure water. Subsequently, pure water was further added thereto, such that the amount of the aqueous solution reached 1000 ml, so that an aqueous atomization solution s11 was prepared. Through atomization and thermal decomposition of the aqueous atomization solution s11, 0.1 mol per L of 20 mass% SSC-80 mass% SDC can be synthesized.

### <Synthesis of composite particle powder (Examples and Comparative Examples)>

In Examples 1 to 6 and Comparative Examples 1 to 5, the aqueous atomization solutions s1 to s6 and s7 to s11 were atomized and thermally decomposed by the atomization and thermal decomposition method using ultrasonic vibration, so that 10 types of SSC-SDC composite particle powder and one type of LSM-8YSZ composite particle powder were obtained. Air was used as carrier gas, and a three-stage electric furnace (internal temperature of the furnace in order from the front stage: 300, 700 and 900°C, furnace heating time in order from the front stage: 8 seconds, 8 seconds and 8 seconds) was used as a heating furnace.

As a result of X-ray diffraction analysis of the 10 types of composite particle powder of SSC-SDC, diffraction peaks to identify SSC and SDC were observed in any of the SSC-SDC composite particle powder, so that it was confirmed that the composite particle powder contained crystalline SSC and SDC. Also, as a result of X-ray diffraction analysis of the LSM-8YSZ composite particle powder, diffraction peaks to identify LSM and 8YSZ were observed, so that it was confirmed that the composite particle powder contained crystalline LSM and 8YSZ.

### <Commercially available SSC-SDC>

In Comparative Example 6, a commercially available SSC (D50=0.9 µm, manufactured by Kusaka Rare Metal Products Co., Ltd.) and a commercially available SDC (D50=0.1 µm, manufactured by Hokko Chemical Industry Co., Ltd.) were prepared to be mixed at a ratio shown in Table 1.

### <Particle size distribution measurement>

The composite particle powder obtained was dispersed in an aqueous solution of sodium hexametaphosphate (0.2 mass%) for particle size distribution measurement. The particle size distribution measurement by laser diffraction analysis (Microtrack HRA9320-X100, manufactured by Nikkiso Co., Ltd.) was performed three times for each analysis time of 30 seconds, so as to obtain the values of volume-based D25, D50 and D75, and D75/D25 from the average thereof. The results are shown in Table 1.

### <BET specific surface area>

The BET specific surface area of the composite particle powder obtained was measured by the nitrogen adsorption BET 5-point method using a high-precision, multi-specimen gas adsorption analyzer (Autosorb-iQ, manufactured by Quantachrome Instruments Japan G. K.). The results are shown in Table 1.

### <Rietveld analysis>

The mass ratio of the composite particle powder produced was obtained by Rietveld analysis of the XRD diffraction results. The results are shown in Table 1.

### <Production of electrode>

To 100 mass% of the composite particle powder thus obtained, a mixture of 8 mass% of ethyl cellulose, 8 mass% of a plasticizer, 4.8 mass% of a dispersant, and 60 mass% of α-terpineol was added, and the mixture was kneaded by a kneader at room temperature for 1 minute and 30 seconds so as to obtain a slurry for electrodes. Subsequently, the slurry for electrodes was screenprinted to a film thickness of 20 µm. The film of SSC-SDC (Examples 1 to 5 and Comparative Examples 1 to 6) was formed on a sintered pellet of Ce_{0.9}Gd_{0.1}O_{1.95}, and the film of LSM-8YSZ (Example 6) was on a sintered pellet of 8YSZ. The sintered pellet of Ce_{0.9}Gd_{0.1}O_{1.95} was obtained by uniaxial-pressing 2.2 g of Ce_{0.9}Gd_{0.1}O_{1.95} powder (CGO 90/10, UHSA, manufactured by Solvay Special Chem Japan, Ltd.) under 20 MPa using a carbide die having a diameter of 26 mm, and then firing the pressed product at 1350°C for 3 hours. Also, the sintered pellet of 8YSZ was obtained by uniaxial-pressing 1.5 g of 8YSZ powder (TZ-8Y, manufactured by TOSOH Corporation) under 20 MPa using a carbide die having a diameter of 26 mm, and then firing the pressed product at 1350°C for 3 hours. Subsequently, SSC-SDC (Example 1 to 5 and Comparative Examples 1 to 6) was fired at 950°C for 1 hour, and LSM-8YSZ (Example 6) was fired at 1200°C for 3 hours, so as to produce electrodes.

### <Performance evaluation of electrode>

The electrode resistance per area at 800°C of the electrode obtained was measured under an air atmosphere by the alternating current impedance method (1287, 1255B manufactured by Solartron Analytical). The results are shown in Table 1. The electrode resistance is the difference between the real impedances at the two intercepts on the horizontal axis in a Cole-Cole plot of a cell as a measuring object obtained by the alternating current impedance method, wherein the Cole-Cole plot is a graph obtained by varying the frequency and plotting the real impedance Z' (Ω) on the horizontal axis and the imaginary impedance Z" (Ω) on the vertical axis for each frequency.

**[Table 1]**

| | Total molar concentration in terms of oxides¹⁾ (mol/L) | Aqueous atomization solution | Electron-conducting material | | Ion-conducting material | | Particle distribution of composite particle powder (µm) | | | | BET specific surface area (m²/g) | Electrode resistance³⁾ (mΩcm²) |
|---|---|---|---|---|---|---|---|---|---|---|---|---|
| | | | Composition | Mass% | Composition²⁾ | Mass% | D25 | D50 | D75 | D75/D25 | | |
| Example 1 | 0.1 | s1 | Sm_{0.5}Sr_{0.5}CoO₃ | 60 | SDC | 40 | 0.79 | 1.01 | 1.30 | 1.65 | 21.0 | 22 |
| Example 2 | 0.1 | s2 | Sm_{0.5}Sr_{0.5}CoO₃ | 50 | SDC | 50 | 0.69 | 0.87 | 1.08 | 1.57 | 9.5 | 17 |
| Example 3 | 0.1 | s3 | Sm_{0.5}Sr_{0.5}CoO₃ | 40 | SDC | 60 | 0.63 | 0.81 | 1.04 | 1.65 | 13.6 | 24 |
| Example 4 | 0.1 | s4 | Sm_{0.5}Sr_{0.5}CoO₃ | 30 | SDC | 70 | 0.59 | 0.7 | 0.84 | 1.42 | 12.5 | 28 |
| Example 5 | 0.1 | s5 | SM_{0.5}Sr_{0.5}CoO₃ | 25 | SDC | 75 | 0.58 | 0.69 | 0.84 | 1.45 | 13.2 | 35 |
| Example 6 | 0.1 | s6 | La_{0.6}Sr_{0.4}MnO₃ | 45 | 8YSZ | 55 | 0.66 | 0.76 | 0.89 | 1.35 | 14.4 | 42 |
| Comparative Example 1 | 0.1 | s7 | Sm_{0.5}Sr_{0.5}CoO₃ | 80 | SDC | 20 | 0.82 | 1.04 | 1.34 | 1.63 | 14.2 | 152 |
| Comparative Example 2 | 0.02 | s8 | Sm_{0.5}Sr_{0.5}CoO₃ | 70 | SDC | 30 | 0.57 | 0.71 | 0.90 | 1.58 | 18.5 | 133 |
| Comparative Example 3 | 0.1 | s9 | Sm_{0.5}Sr_{0.5}CoO₃ | 70 | SDC | 30 | 0.87 | 1.11 | 1.45 | 1.67 | 10.3 | 86 |
| Comparative Example 4 | 0.5 | s10 | Sm_{0.5}Sr_{0.5}CoO₃ | 70 | SDC | 30 | 1.21 | 1.54 | 2.12 | 1.75 | 8.5 | 96 |
| Comparative Example 5 | 0.1 | s11 | Sm_{0.5}Sr_{0.5}CoO₃ | 20 | SDC | 80 | 0.58 | 0.7 | 0.83 | 1.43 | 12.6 | 100 |
| Comparative Example 6 | Commercially available product | | Sm_{0.5}Sr_{0.5}CoO₃ | 50 | SDC | 50 | 0.5 | 0.9 | 1.60 | 3.20 | 13.7 | 60 |
| Reference Example 7⁴⁾ | 0.1 | | La_{0.7}Sr_{0.3}MnO₃ | 42 | 8YSZ | 48 | 0.51 | 0.66 | 0.87 | 1.71 | 2.3 | 67 |
| Reference Example 8⁴⁾ | 0.3 | | La_{0.7}Sr_{0.3}MnO₃ | 42 | 8YSZ | 48 | 0.71 | 0.92 | 1.19 | 1.68 | 1.9 | 84 |
| Reference Example 9⁴⁾ | 0.1 | | La_{0.7}Sr_{0.3}MnO₃ | 45 | 10Sc1CeSZ | 55 | 0.66 | 0.84 | 1.06 | 1.60 | 1.9 | 58 |
| Reference Example 10⁴⁾ | Commercially available product | | La_{0.8}Sr_{0.2}MnO₃ | 50 | 10Sc1CeSZ | 50 | 0.81 | 1.2 | 2.01 | 2.48 | 2.9 | 257 |

1) Total molar concentration in terms of electron-conducting material and ion-conducting material in aqueous atomization solution
2) 10Sc1CeSZ: scandia-ceria-stabilized zirconia containing 10 mol% scandia and 1 mol% ceria in terms of oxides
3) Electrode resistance at 800°C
4) In Reference Examples 1 to 4, values are cited from Table 1 in Patent Literature (Japanese Patent Laid-Open No. 2010-282932).

Lower electrode resistances were shown in Examples 1 to 6, compared with those in Comparative Examples 1 to 6 and Reference Examples 1 to 4. The reason is as follows. Through control of D50, D75/D25, the BET specific surface area, and the content of the ion-conducting material in the composite particle powder within specific ranges, the reaction filed in the electrode was remarkably increased, and good conduction paths for electrons and ions were formed, so that the lower electrode resistance was achieved.

According to the present invention, an electrode for a solid oxide cell having excellent performance with a low electrode resistance, and a solid oxide cell can be produced.

## Claims

1. A composite particle powder comprising an electron-conducting material and an ion-conducting material that are agglomerated together, the electron-conducting material being an electron-conducting oxide or a metal having catalytic activity and the ion-conducting material being an oxide having oxide ion-conductivity or an oxide having proton-conductivity;
the composite particle powder having a volume-based 50% particle diameter (D50) of larger than 0.1 µm and 2.0 µm or less in particle size distribution measurement;
the composite particle powder having a ratio of volume-based 75% particle diameter (D75) to 25% particle diameter (D25), (D75/D25), of 1.1 to 2.2 in particle size distribution measurement;
the composite particle powder having D50 and a BET specific surface area that satisfy the following:
(I) in the case of 0.1 µm < D50 of the composite particle powder ≤ 0.5 µm, the BET specific surface area of the composite particle powder is larger than 25 m²/g and 200 m²/g or less;
(II) in the case of 0.5 µm < D50 of the composite particle powder ≤ 0.9 µm, the BET specific surface area of the composite particle powder is larger than 5 m²/g and 50 m²/g or less;
(III) in the case of 0.9 µm < D50 of the composite particle powder ≤ 1.3 µm, the BET specific surface area of the composite particle powder is larger than 4 m²/g and 30 m²/g or less; and
(IV) in the case of 1.3 µm < D50 of the composite particle powder ≤ 2.0 µm, the BET specific surface area of the composite particle powder is larger than 2 m²/g and 20 m²/g or less; and
the composite particle powder having an ion-conducting material content of 35 to 75 mass%,
wherein the particle size distribution of the composite particle powder is measured by laser diffraction particle size analysis and the volume-based D25, D50 and D75 in particle size distribution measurement are diameters of particles corresponding to the cumulative volumes at 25%, 50% and 75% from the lower end relative to the total volume, respectively..

2. An electrode for a solid oxide cell, obtained by forming and firing the composite particle powder according to claim 1.

3. The electrode for a solid oxide cell according to claim 2, wherein the composite particle powder is a composite particle powder for an air electrode.

4. The electrode for a solid oxide cell according to claim 2, wherein the composite particle powder is a composite particle powder for a fuel electrode.

5. A solid oxide cell comprising an electrolyte, and an air electrode and a fuel electrode sandwiching the electrolyte, wherein the air electrode is the electrode for a solid oxide cell according to claim 3.

6. A solid oxide cell comprising an electrolyte, and an air electrode and a fuel electrode sandwiching the electrolyte, wherein the fuel electrode is the electrode for a solid oxide cell according to claim 4.

## Patentansprüche

1. Verbundteilchenpulver, umfassend ein elektronenleitendes Material und ein ionenleitendes Material, die zusammen agglomeriert sind, wobei das elektronenleitende Material ein elektronenleitendes Oxid oder ein Metall mit katalytischer Aktivität ist und das ionenleitende Material ein Oxid mit Oxidionenleitfähigkeit oder ein Oxid mit Protonenleitfähigkeit ist;
wobei das Verbundteilchenpulver einen volumenbasierten 50%-Teilchendurchmesser (D50) von größer als 0,1 µm und 2,0 µm oder weniger bei der Messung der Teilchengrößenverteilung aufweist;
wobei das Verbundteilchenpulver ein Verhältnis von volumenbasiertem 75%-Teilchendurchmesser (D75) zu 25%-Teilchendurchmesser (D25) (D75/D25) von 1,1 bis 2,2 bei der Messung der Teilchengrößenverteilung aufweist;
wobei das Verbundteilchenpulver einen D50 und eine spezifische BET-Oberfläche aufweist, die die folgenden Bedingungen erfüllen:
(I) im Fall von 0,1 µm < D50 des Verbundteilchenpulvers ≤ 0,5 µm ist die spezifische BET-Oberfläche des Verbundteilchenpulvers größer als 25 m²/g und 200 m²/g oder weniger;
(II) im Fall von 0,5 µm < D50 des Verbundteilchenpulvers ≤ 0,9 µm ist die spezifische BET-Oberfläche des Verbundteilchenpulvers größer als 5 m²/g und 50 m²/g oder weniger;
(III) im Fall von 0,9 µm < D50 des Verbundteilchenpulvers ≤ 1,3 µm ist die spezifische BET-Oberfläche des Verbundteilchenpulvers größer als 4 m²/g und 30 m²/g oder weniger; und
(IV) im Fall von 1,3 µm < D50 des Verbundteilchenpulvers ≤ 2,0 µm ist die spezifische BET-Oberfläche des Verbundteilchenpulvers größer als 2 m²/g und 20 m²/g oder weniger; und
wobei das Verbundteilchenpulver einen Gehalt an ionenleitendem Material von 35 bis 75 Massen-% aufweist,
wobei die Teilchengrößenverteilung des Verbundteilchenpulvers durch Laserbeugungs-Teilchengrößenanalyse gemessen wird und die volumenbasierten D25, D50 und D75 bei der Messung der Teilchengrößenverteilung Durchmesser von Teilchen sind, die den kumulativen Volumina bei 25%, 50% bzw. 75% vom unteren Ende relativ zum Gesamtvolumen entsprechen.

2. Elektrode für eine Festoxidzelle, erhalten durch Formen und Brennen des Verbundteilchenpulvers nach Anspruch 1.

3. Elektrode für eine Festoxidzelle nach Anspruch 2, wobei das Verbundteilchenpulver ein Verbundteilchenpulver für eine Luftelektrode ist.

4. Elektrode für eine Festoxidzelle nach Anspruch 2, wobei das Verbundteilchenpulver ein Verbundteilchenpulver für eine Brennstoffelektrode ist.

5. Festoxidzelle umfassend einen Elektrolyten und eine Luftelektrode und eine Brennstoffelektrode, die den Elektrolyten sandwichartig umgeben, wobei die Luftelektrode die Elektrode für eine Festoxidzelle nach Anspruch 3 ist.

6. Festoxidzelle umfassend einen Elektrolyten und eine Luftelektrode und eine Brennstoffelektrode, die den Elektrolyten sandwichartig umgeben, wobei die Brennstoffelektrode die Elektrode für eine Festoxidzelle nach Anspruch 4 ist.

## Revendications

1. Poudre de particules composites comprenant une matière conductrice d'électrons et une matière conductrice d'ions qui sont agglomérées ensemble, la matière conductrices d'électrons étant un oxyde conducteur d'électrons ou un métal présentant une activité catalytique et la matière conductrice d'ions étant un oxyde avec conductivité ionique d'oxyde ou un oxyde avec conductivité protonique ;
la poudre de particules composites présentant un diamètre particulaire 50% en volume (D50) supérieur à 0,1 µm et est de 2,0 µm ou moins en mesure de distribution des tailles de particules ;
la poudre de particules composites présentant un rapport diamètre particulaire 75% en volume (D75) à diamètre particulaire 25% (D25), (D75/D25), de 1,1 à 2,2 en mesure de distribution des tailles de particules ;
la poudre de particules composites ayant une D50 et une surface spécifique BET qui satisfont à ce qui suit :
(I) dans le cas où 0,1 µm < D50 de la poudre de particules composites ≤ 0,5 µm, l'aire de surface spécifique BET de la poudre de particules composites est plus grande que 25 m²/g et est de 200 m²/g ou moins ;
(II) dans le cas où 0,5 µm < D50 de la poudre de particules composites ≤ 0,9 µm, l'aire de surface spécifique BET de la poudre de particules composites est plus grande que 5 m²/g et est de 50 m²/g ou moins ;
(III) dans le cas où 0,9 µm < D50 de la poudre de particules composites ≤ 1,3 µm, l'aire de surface spécifique BET de la poudre de particules composites est plus grande que 4 m²/g et est de 30 m²/g ou moins ; et
(IV) dans le cas où 1,3 µm < D50 de la poudre de particules composites ≤ 2,0 µm, l'aire de surface spécifique BET de la poudre de particules composites est plus grande que 2 m²/g et 20 m²/g ou moins ; et
la poudre de particules composites présentant une teneur en matière conductrice d'ions allant de 35 à 75 % en masse,
dans lequel la distribution des tailles de particules de la poudre de particules composites est mesurée par analyse granulométrique par diffraction laser et les D25, D50 et D75 en volume dans la mesure de la distribution des tailles particules sont des diamètres de particules correspondant aux volumes cumulés respectivement à 25%, 50% et 75% de l'extrémité inférieure par rapport au volume total.

2. Électrode pour pile à oxyde solide, obtenue par formation et calcination de la poudre de particules composites selon la revendication 1.

3. Électrode pour pile à oxyde solide selon la revendication 2, dans laquelle la poudre de particules composites est une poudre de particules composites pour une électrode oxydoréductrice.

4. Électrode pour pile à oxyde solide selon la revendication 2, dans laquelle la poudre de particules composites est une poudre de particules composites pour une électrode à combustible.

5. Pile à oxyde solide comprenant un électrolyte et une électrode oxydoréductrice ainsi qu'une électrode à combustible prenant l'électrolyte en sandwich, dans laquelle l'électrode oxydoréductrice est l'électrode pour pile à oxyde solide selon la revendication 3.

6. Pile à oxyde solide comprenant un électrolyte et une électrode oxydoréductrice ainsi qu'une électrode à combustible prenant l'électrolyte en sandwich, dans laquelle l'électrode à combustible est l'électrode pour une pile à oxyde solide selon la revendication 4.
